# EUROPEAN PATENT APPLICATION

(11) **EP 2 557 810 A2**
(43) Date of publication of application: **13.02.2013**
(21) Application number: 12179641.1
(22) Date of filing: 08.08.2012
(51) Int. Cl.: H04Q 9/00

(54) **Smart grid device display control system and method**

(30) Priority: 11.08.2011 US 201113207686
(71) Applicant: General Electric Company, Schenectady, NY 12345 (US)
(72) Inventor: Sfaelos, Jimmy, Atlanta, GA Georgia 30339 (US)
(74) Representative: Picker, Madeline Margaret

(57) **Abstract**

A smart grid device display control system (100) can include a demand response management system (115), a smart meter (120) operatively coupled to the demand response management system (115), and a smart grid device (130) operatively coupled to the smart meter (120), the smart grid device (130) including a lighted display (131) configured to power cycle in response to a power cycle indication.

## Description

### BACKGROUND OF THE INVENTION

The subject matter disclosed herein relates to electrical power distribution systems and more particularly to management of displays on smart grid devices such as appliances.

In a power distribution network, several types of devices are supplied power including, but not limited to consumer devices that have lighted displays. Examples of consumer appliances that have displays include, but are not limited to clocks, stereos, computers, digital video recorders and refrigerators. Other types of devices include banner lights such and soft drink or candy machines. Typically these display and banner lights (hereinafter display lights) are powered constantly. The device's owners therefore pay for the associated electric usage when not needed. For example, homeowners typically own several devices with lighted displays that remain powered on during the work day when the owner is not present. These devices in particular are drawing additional power during peak hours. Some estimates indicate that as much as 5% of the total power in the power distribution network is from lighted displays. In addition, with the advent of plug-in electric vehicles, often the displays in the vehicles remain lighted during charging overnight.

A smart grid delivers electricity from suppliers to consumers using two-way communications to control smart grid appliances at consumers' homes, which allows the utility to control the smart grid appliances (e.g., at peak times) and in return gives the consumer some benefit such as reduced rates. The smart grid is a part of the power distribution network and can include smart meters, which record power consumption at time intervals and communicates the information back to the utility for monitoring and billing purposes. Smart meters enable the two-way communication between the meter and the central system. Smart meters can gather data for remote reporting.

Power distribution networks supply the least expensive energy to consumers as it is able. As demand increases, the utility must then use more and more expensive sources of energy. As such, if the overall power consumption of the power grid can be reduced by controlling consumer smart grid appliances via the smart meters, then the utility and thus the consumer could realize energy savings.

### BRIEF DESCRIPTION OF THE INVENTION

According to one aspect of the invention, a smart grid device display control system is described. The system can include a demand response management system, a smart meter operatively coupled to the demand response management system, and a smart grid device operatively coupled to the smart meter, the smart grid device including a lighted display configured to power cycle in response to a power cycle indication.

According to another aspect of the invention, a smart grid device display control method is described. The method can include receiving an indication to power cycle a lighted display and power cycling the lighted display in response to receipt of the indication.

According to yet another aspect of the invention, a computer program product including a non-transitory computer readable medium storing instructions for causing a computer to implement a smart grid device display control method is described. The method can include receiving an indication to power cycle a lighted display and power cycling the lighted display in response to receipt of the indication.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates an example system for controlling smart grid appliance displays in power distribution network.
FIG. 2 illustrates an example embodiment of a system for controlling lighted displays on smart grid appliances.

The detailed description explains embodiments of the invention, together with advantages and features, by way of example with reference to the drawings.

### DETAILED DESCRIPTION OF EMBODIMENTS OF THE INVENTION

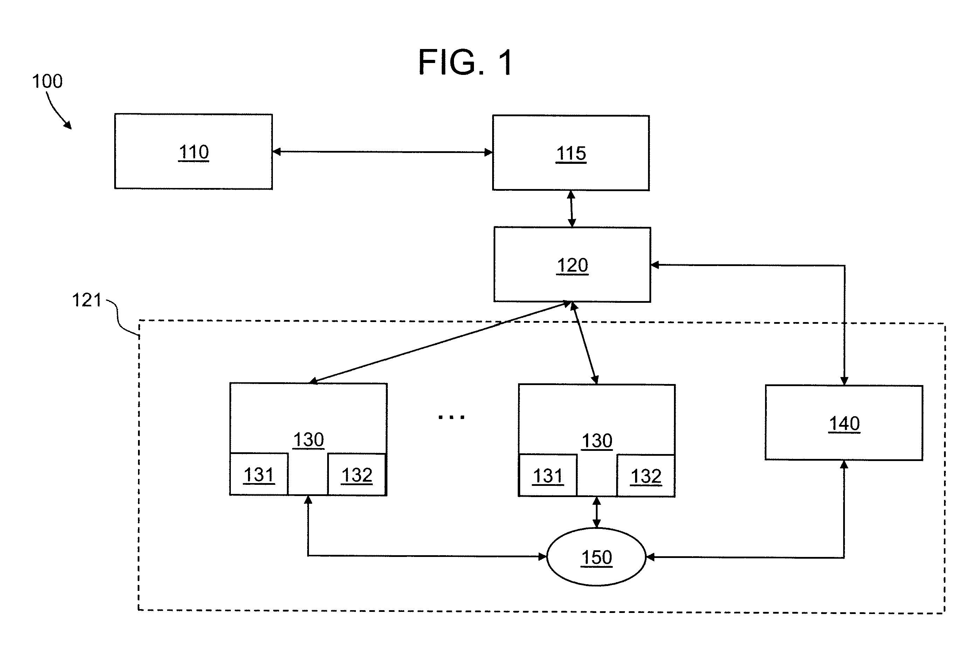

FIG. 1 illustrates an example system 100 for controlling smart grid appliance displays in power distribution network. It will be appreciated that the system 100 is a part of a larger power distribution network controlled by a power utility. In example embodiments, the systems and methods described herein reduce power usage associated with lighted displays of smart grid appliances by powering down the lighted displays during high demand peak periods of days. In addition, the systems and methods described herein can power down the lighted displays when people are not present. It will also be appreciated that the term "appliance" is not limiting but used as an illustrative example throughout the detailed description. It will further be appreciated that the systems and methods described herein can apply to any device having a lighted display.

In example embodiments, the system 100 can include a distribution management system (DMS) or outage management system (OMS) (collectively DMS/OMS 110). A distribution management system is an electric power utility operational system responsible for collecting data from and controlling all electric power distribution devices (e.g., switches, voltage regulators, and capacitor banks) on the power distribution network. The distribution management system actively manages distribution devices to increase efficiency and reliability in the power distribution network. The distribution management system can also collect and examine data for the purposes of setting rates, making rate adjustments and controlling consumer devices via messages to the consumer devices. An outage management system can predict locations of fuses or breakers that open upon a failure, prioritize restoration efforts and manage resources based upon criteria such as locations of emergency facilities, size of outages, and duration of outages, provide information on the extent of outages and number of customers impacted to management, media and regulators, calculate an estimation of restoration times, manage crews assisting restoration and calculate crews necessary for a restoration. The system can further include a demand response management system (DRMS) 115 that is operatively coupled to the DMS/OMS 110. The DRMS 115 links the electric utility back office to the utility customers in order to reduce the loads during peak energy consumption periods. When the electric utility back office identifies a current peak energy consumption period, DRMS 115 will signal smart grid meters and the consumer devices (both described further herein) communicating with the meters to reduce electric power consumption. In example embodiments, demand response events can be controlled by directly controlling end consumer devices (i.e., direct load control), or by sending variable power rates to end consumer devices (i.e., pricing control) to shift consumer electric power consumption behavior. The DRMS 115 is therefore a utility operational system responsible for creating and managing demand response events that control end consumer electric power consumption.

In example embodiments, the DRMS 115 can communicate directly with a customer smart meter 120, which can be via an Automated Metering Infrastructure (AMI) communication backhaul as known in the art. The DRMS 115 can therefore have direct control and access to the smart meter 120. The DRMS 115 can therefore have direct control and access to the smart meter 120. In example embodiments, the smart meter 120 is an electrical meter that records consumption of electric energy in pre-determined time and communicates that information back to the DRMS 115 for monitoring and billing purposes. The smart meter 120 enables two-way communication between the meter and DRMS 115 and gathers data for remote reporting.

It will be appreciated therefore that the DRMS 115 can control the lighted displays of consumer devices. The smart meter is communicatively coupled to a consumer residence 121.

In example embodiments, the system can further include one or more consumer devices 130 (i.e., smart grid appliances) operatively coupled to the smart meter 120, and disposed within the consumer residence 121. Each of the consumer devices can further include a lighted display 131 as described herein, and a motion sensor 132 as further described herein. The lighted displays 131 can include but are not limited to clocks, status lights and control lights. The system 100 can further include a home area network (HAN) (or residential local area network (LAN)) disposed in the consumer residence 121. Although the HAN 140 includes several components, the HAN 140 is illustrated as a single component. The HAN 140 can include a modem (e.g., cable, digital subscriber line (DSL)), residential gateway, bridge, router and other suitable devices for distributing and sharing network access throughout the consumer residence. The HAN 140 can also include one or more computers for controlling any devices coupled to the HAN 140. As such, the HAN 140 is implemented for communication between devices typically deployed in the consumer residence 121, which can include personal computers and accessories, such as printers and mobile computing devices, as well as the consumer devices 130. The HAN 140 can be wired (e.g., a category 3 (CAT3) or a category 6 (CAT6) shielded or unshielded twisted pair cabling) or wireless (e.g., an 802.11 network). The system 100 can further include one or more motion sensors 150 disposed within the consumer residence 121, and operatively coupled to the HAN 140. In example embodiments, the motion sensors 150 are external to the consumer devices 130.

In example embodiments, the consumer devices 130 are configured to shut down their lighted displays 131 in response to several conditions. Under one condition, the lighted displays 131 can shut down when people are not present in a detection range of the motion sensors 132 (i.e., proximate the motions sensors 132) on the consumer devices 130 in the consumer residence 121. In example embodiments, if the motions sensors 132 detect movement in the immediate detection range of the motions sensors 132, then the lighted displays can be powered on. After a pre-determined period of time, if the motion sensors 132 do not detect any movement, then the lighted displays 131 can be powered off. In this way, when people are not present, thus indicating that the lighted displays 131 are not needed, energy consumption in the consumer residence 121 can be reduced by powering off the lighted displays 131. In another example embodiment, the motion sensors 150 can also determine if there are people present in a detection range of the motion sensors 150 (i.e., proximate the motion sensors 150). As described herein, the motion sensors 150 are communicatively coupled to the HAN 140. The HAN 140 can be configured to perform a coordinated power off of any of the consumer devices 130 that are within the detection range of the motions sensors 150 by sending messages to the consumer devices 130 to power down their respective lighted displays 131. In this way if the motions sensors 150 detect movement in the immediate detection range of the motion detectors 150, then the lighted displays 131 on the consumer devices 130 within the detection range can be powered on. After a pre-determined period of time, if the motions sensors 150 do not detect any movement, then the lighted displays 131 can be powered off. It will be appreciated that the consumer devices may not include built-in motion sensors 132. As such, with the HAN 140 enabled, the motions sensors 150 can then be implemented to control the lighted displays 131. In addition, the HAN 140 can be configured to control the consumer devices 130 all at once or separately. In addition, the owner of the consumer residence 121 can program HAN 140 to power cycle the consumer appliances at specified times of day. For example, the owner can program the HAN 140 to keep the lighted displays 131 off all day when the owner is away in the event that the owner has pets that may trigger the motions sensors 132, 150. Alternatively, the owner of the consumer residence 121 can program the HAN 140 to turn on the lighted displays 131 when there is no motion detected to simulate that the consumer residence 121 is occupied when no one is actually present in the consumer residence 121.

In example embodiments, under another condition, the DRMS 115 can send messages to the smart meter 120 to control the lighted displays 131. The owner of the consumer residence 121 can bargain with the power utility for lower rates by agreeing to have not only certain of the consumers devices 130 power cycled depending on conditions in the power distribution network, but also simply have the lighted displays 131 power cycled depending on the conditions in the power distribution network. In this way, the DRMS 115 can have direct control over all or a segment of lighted displays (including the lighted displays 131) in a certain power grid. For example, the utility can power down all lighted displays (including the lighted displays 131) during peak usage to lower the overall power consumption in a particular grid. In addition, the utility can power down all lighted displays (including the lighted displays 131) during non-peak usage (e.g., during night hours) to lower the overall power consumption in a particular grid.

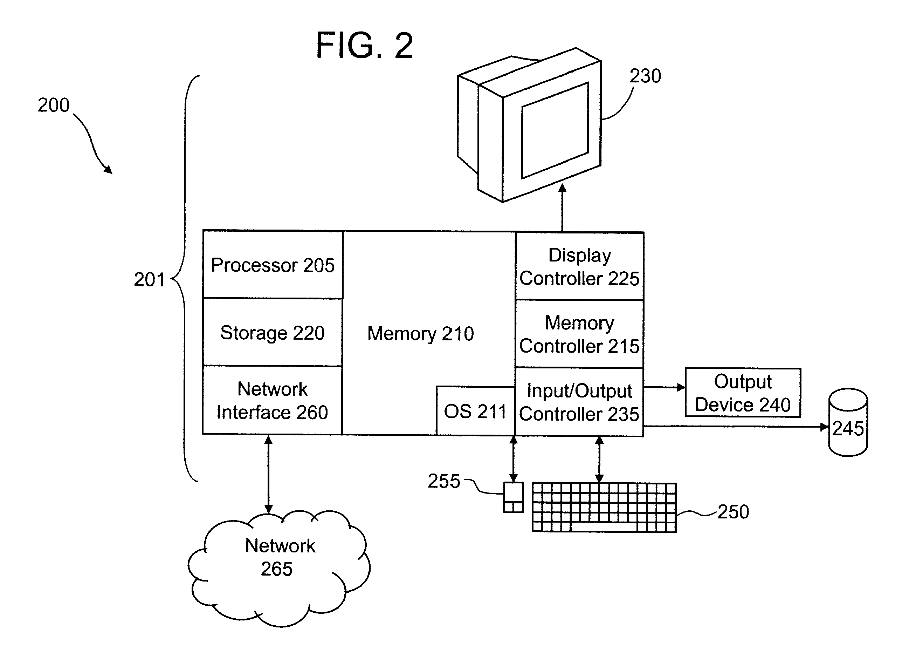

Further details of the HAN 140 are now described with respect to an example computer system. FIG. 2 illustrates an example embodiment of a system 200 for controlling lighted displays on smart grid appliances. The methods described herein can be implemented in software (e.g., firmware), hardware, or a combination thereof. In example embodiments, the methods described herein are implemented in software, as an executable program, and is executed by a special or general-purpose digital computer, such as a personal computer, workstation, minicomputer, or mainframe computer. The system 200 therefore includes general-purpose computer 201.

In example embodiments, in terms of hardware architecture, as shown in FIG. 2, the computer 201 includes a processor 205, memory 210 coupled to a memory controller 215, and one or more input and/or output (I/O) devices 240, 245 (or peripherals) that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 205 is a hardware device for executing software, particularly that stored in memory 210. The processor 205 can be any custom made or commercially available processor, a central processing unit (CPU), an auxiliary processor among several processors associated with the computer 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 210 may incorporate electronic, magnetic, optical, and/or other types of storage media. Note that the memory 210 can have a distributed architecture, where various components are situated remote from one another, but can be accessed by the processor 205.

The software in memory 210 may include one or more separate programs, each of which comprises an ordered listing of executable instructions for implementing logical functions. In the example of FIG. 2, the software in the memory 210 includes the lighted display control methods described herein in accordance with example embodiments and a suitable operating system (OS) 211. The OS 211 essentially controls the execution of other computer programs, such the lighted display control systems and methods as described herein, and provides scheduling, input-output control, file and data management, memory management, and communication control and related services.

The lighted display control methods described herein may be in the form of a source program, executable program (object code), script, or any other entity comprising a set of instructions to be performed. When a source program, then the program needs to be translated via a compiler, assembler, interpreter, or the like, which may or may not be included within the memory 210, so as to operate properly in connection with the OS 211. Furthermore, the lighted display control methods can be written as an object oriented programming language, which has classes of data and methods, or a procedure programming language, which has routines, subroutines, and/or functions.

In example embodiments, a conventional keyboard 250 and mouse 255 can be coupled to the input/output controller 235. Other output devices such as the I/O devices 240, 245 may include input devices, for example but not limited to a printer, a scanner, microphone, and the like. Finally, the I/O devices 240, 245 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The system 200 can further include a display controller 225 coupled to a display 230. In example embodiments, the system 200 can further include a network interface 260 for coupling to a network 265. The network 265 can be an IP-based network for communication between the computer 201 and any external server, client and the like via a broadband connection. The network 265 transmits and receives data between the computer 201 and external systems. In example embodiments, network 265 can be a managed IP network administered by a service provider. The network 265 may be implemented in a wireless fashion, e.g., using wireless protocols and technologies, such as WiFi, WiMax, etc. The network 265 can also be a packet-switched network such as a local area network, wide area network, metropolitan area network, Internet network, or other similar type of network environment. The network 265 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 201 is a PC, workstation, intelligent device or the like, the software in the memory 210 may further include a basic input output system (BIOS) (omitted for simplicity). The BIOS is a set of essential software routines that initialize and test hardware at startup, start the OS 211, and support the transfer of data among the hardware devices. The BIOS is stored in ROM so that the BIOS can be executed when the computer 201 is activated.

When the computer 201 is in operation, the processor 205 is configured to execute software stored within the memory 210, to communicate data to and from the memory 210, and to generally control operations of the computer 201 pursuant to the software. The lighted display control methods described herein and the OS 211, in whole or in part, but typically the latter, are read by the processor 205, perhaps buffered within the processor 205, and then executed.

When the systems and methods described herein are implemented in software, as is shown in FIG. 2, the methods can be stored on any computer readable medium, such as storage 220, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In example embodiments, where the lighted display control methods are implemented in hardware, the lighted display control methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Technical advantages include an overall reduction in power consumption of a power grid including lower electric utility bills and appliances with displays and status lights lasting longer between failures, thereby increasing the overall life of the displays. In addition, power utilities can use less expensive energy resources during peak hours by reducing the overall load on the power grid. Furthermore, plug-in electric cars can use lower cost energy if the overall night time electricity is from an inexpensive source.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A smart grid device display control system (100), comprising:
a demand response management system (DRMS) (115);
a smart meter (120) operatively coupled to the DRMS (115);
a smart grid device (130) operatively coupled to the smart meter (120), the smart grid device (130) including a lighted display (131) configured to power cycle in response to a power cycle indication.

2. The system as claimed in Claim 1, wherein the smart grid device (130) includes an onboard motion sensor (132) operatively coupled to the lighted display (131).

3. The system as claimed in Claim 2, wherein the indication is a signal from the onboard motion sensor (132), thereby indicating movement proximate the onboard motion sensor (132).

4. The system as claimed in Claim 1, 2 or 3, wherein the indication is a message via the smart meter (120) and from the DRMS (115) to power cycle the lighted display (131).

5. The system as claimed in any one of Claims 1 to 4, further comprising a home area network (HAN) (140) operatively coupled to the smart grid device (130).

6. The system as claimed in Claim 5, further comprising a motion sensor (150) external to the smart grid device (130) and operatively coupled to the HAN (140).

7. The system as claimed in Claim 6, wherein the indication is a signal from the motion sensor (150) external to the smart grid device (130), thereby indicating movement proximate the motion sensor (150) external to the smart grid device (130).

8. The system as claimed in Claim 7, wherein the HAN (140) is configured to override the signal from the motion sensor (150) external to the smart grid device (130).

9. The system as claimed in any preceding Claim, wherein the lighted display (131) is configured to remain powered on for a predetermined period of time.

10. The system as claimed in Claim 9, wherein the lighted display (131) is configured to power on in response to a receipt of the indication.

11. A smart grid device display control method, comprising:
receiving an indication to power cycle a lighted display (131); and
power cycling the lighted display (131) in response to receipt of the indication.

12. The method as claimed in Claim 11, wherein the indication is a message from a demand response management system (DRMS) (115) to power down the lighted display

13. The method as claimed in Claim 11 or 12, wherein the indication is a signal from an onboard motion sensor (132) that there is movement proximate the onboard motion sensor.

14. The method as claimed in Claim 11, 12 or 13, wherein the indication is a message from a home area network (HAN), and wherein the message preferably indicates that there is motion proximate a motion sensor (150) external to the smart grid device (130).

15. A computer program product including a non-transitory computer readable medium storing instructions for causing a computer to implement a smart grid device display control method as claimed in any one of Claims 11 to 14.
